# EUROPEAN PATENT APPLICATION

(11) **EP 4 685 439 A1**
(43) Date of publication of application: **28.01.2026**
(21) Application number: 24190742.7
(22) Date of filing: 24.07.2024
(51) Int. Cl.: G01D 4/00

(54) **WIRELESS METER READING AND EVALUATION**

(71) Applicant: Landis+Gyr GmbH, 90459 Nürnberg (DE)
(72) Inventor: LIEDTKE, Moritz, Nürnberg (DE); STUREK, Robert, 69242 Mühlhausen (DE); BÄR, Siegfried, 90459 Nürnberg (DE)
(74) Representative: Marks & Clerk LLP

(57) **Abstract**

A meter for measuring a consumption of a utility, comprises a measurement arrangement for measuring a consumption of a utility; a wireless communication interface for wireless communications between the meter and a mobile electronic device; and a processing resource, wherein the processing resource is configured to receive data relating to the measured consumption of the utility from the measurement arrangement; wirelessly receive a connection request signal from the mobile electronic device; wirelessly connect with the mobile electronic device via the wireless communication interface based on the received connection request signal; and wirelessly transmit, via the wireless communication interface, the data relating to the measured consumption of the utility to the mobile electronic device to enable the mobile electronic device to perform one or more operations with the data relating to the measured consumption of the utility. A mobile electronic device for reading the data relating to the measured consumption of the utility from the meter and for performing one or more operations with the data read from the meter is also disclosed.

## Description

### FIELD

The present disclosure relates to a meter for measuring a consumption of a utility, a mobile electronic device for receiving from the meter, via a wireless communication interface, data relating to the measured consumption of the utility and for performing one or more operations with the data relating to the measured consumption of the utility, a system comprising the meter and the mobile electronic device, associated methods, and an associated computer program or app.

### BACKGROUND

It is known for a user to take a reading from a display of a meter that may, for example, be located at an end customer premises, wherein the reading indicates the consumption of a utility such as electricity, a fluid, gas, water, or heat.

It is also known for a user to record the meter reading and/or to send the meter reading to a supplier of the utility along with the date and time of the meter reading to allow the supplier to prepare or adjust a bill for suppling the utility to the user.

Such known methods for taking a reading from a display of a meter, for recording a meter reading, or for sending the meter reading to a supplier of the utility may be difficult or time-consuming, or may lead to an inaccuracy in the meter reading that is taken from the meter, recorded and/or sent to the supplier of the utility or may lead to an inaccuracy in the date and time of the meter reading.

### SUMMARY

According to an aspect of the present disclosure there is provided a meter for measuring a consumption of a utility, the meter comprising:
a measurement arrangement for measuring a consumption of a utility;
a wireless communication interface for wireless communications between the meter and a mobile electronic device; and
a processing resource configured to:
   receive data relating to the measured consumption of the utility from the measurement arrangement;
   wirelessly receive a connection request signal from the mobile electronic device;
   wirelessly connect with the mobile electronic device via the wireless communication interface based on the received connection request signal; and
   wirelessly transmit, via the wireless communication interface, the data relating to the measured consumption of the utility to the mobile electronic device to enable the mobile electronic device to perform one or more operations with the data relating to the measured consumption of the utility.

Optionally, the wireless communication interface is configured for wireless communications between the meter and a mobile electronic device using a wireless communication signal comprising at least one of: an electromagnetic signal, an RF signal, an optical signal, a time-varying magnetic field or a time-varying electric field.

Optionally, the wireless communication interface is configured for wireless communications between the meter and a mobile electronic device by inductively coupling a wireless communication signal between the wireless communication interface and the mobile electronic device.

Optionally, the wireless communication interface comprises a Near-field Communication (NFC) interface.

Optionally, the meter comprises a memory storing a key, wherein the stored key identifies the meter.

Optionally, the received connection request signal comprises one or more keys which identify one or more meters that a user of the mobile electronic device is authorised to read.

Optionally, the processing resource is configured to:
compare the stored key with the one or more keys of the received connection request signal; and
wirelessly connect with the mobile electronic device via the wireless communication interface in response to the stored key matching one of the one or more keys of the received connection request signal to enable the processing resource to transmit the data relating to the measured consumption of the utility to the mobile electronic device via the wireless communication interface.

Optionally, the received connection request signal comprises a user certificate defining the rights of a user of the mobile electronic device in relation to one or more meters and/or in relation to the data relating to the consumption of the utility which can be read from one or more meters.

Optionally, the processing resource is configured to transmit the data relating to the measured consumption of the utility to the mobile electronic device via the wireless communication interface based on the user certificate.

Optionally, the processing resource is configured to allow the user to change a configuration of the meter based on the user certificate, for example to allow a user to change at least one of: the date, the time, an address such as a Narrow Band Internet of Things (NB-loT) bootstrap server address which the meter connects to, or an alarm setti ng.

Optionally, the processing resource is configured to wirelessly receive a data read request from the mobile electronic device via the wireless communication interface and wirelessly transmit the data relating to the measured consumption of the utility to the mobile electronic device via the wireless communication interface in response to the receipt of the data read request from the mobile electronic device.

Optionally, the processing resource is configured to wirelessly transmit the data relating to the measured consumption of the utility to the mobile electronic device via the wireless communication interface automatically in response to wireless connection with the mobile electronic device without waiting to receive a data read request from the mobile electronic device.

Optionally, the memory stores a link for downloading a computer program such as an app from the internet.

Optionally, the processing resource is configured to:
wirelessly transmit to the mobile electronic device, via the wireless communication interface, a request to transmit the link, to the mobile electronic device in response to establishing a wireless connection between the processing resource and the mobile electronic device for the first time; and
wirelessly transmit the link to the mobile electronic device in response to the receipt, via the wireless communication interface, of a wireless link transmission authorisation signal from the mobile electronic device.

Optionally, the meter comprises, or is configured to display, a code which includes information defining a link for downloading a computer program such as an app from the internet, wherein the code is configured so that, when imaged by a mobile electronic device, the mobile electronic device receives the link, for example wherein the code comprises a QR code

Optionally, the utility comprises electricity, a fluid, gas, water, or heat.

Optionally, the data relating to the measured consumption of the utility comprises one or more utility consumption readings or values and one or more corresponding time stamps or values.

According to an aspect of the present disclosure there is provided a mobile electronic device for reading data relating to the measured consumption of the utility from a meter and for performing one or more operations with the data, the mobile electronic device comprising:
a wireless communication interface for wireless communications between the mobile electronic device and a meter for measuring a consumption of a utility;
a user interface; and
a processing resource configured to:
   wirelessly transmit a connection request signal to the meter via the wireless communication interface;
   wirelessly receive from the meter, via the wireless communication interface, data relating to the measured consumption of the utility based on the transmitted connection request signal; and
   perform one or more operations with the received data relating to the measured consumption of the utility based on one or more commands provided by a user of the mobile electronic device via the user interface.

Optionally, the one or more operations comprise at least one of:
displaying the data relating to the measured consumption of the utility via the user interface;
transmitting the data relating to the measured consumption of the utility to the supplier of the utility; or
saving the data relating to the measured consumption of the utility to a memory of the mobile electronic device.

Optionally, the wireless communication interface is configured for wireless communications between the mobile electronic device and a meter using a wireless communication signal comprising at least one of: an electromagnetic signal, an RF signal, an optical signal, a time-varying magnetic field or a time-varying electric field.

Optionally, the wireless communication interface is configured for wireless communications between the mobile electronic device and a meter by inductively coupling a wireless communication signal between the wireless communication interface and the meter.

Optionally, the wireless communication interface comprises a Near-field Communication (NFC) interface.

Optionally, the mobile electronic device comprises a memory.

Optionally, the memory is configured to store one or more keys for identifying one or more meters which a user of the mobile electronic device is permitted to read.

Optionally, the memory is configured to store a user certificate defining the rights of the user of the mobile electronic device in relation to one or more meters and/or in relation to the data relating to the consumption of the utility which can be read from one or more meters.

Optionally, the connection request signal includes the one or more keys.

Optionally, the connection request signal includes the user certificate.

Optionally, the processing resource is configured to read the data relating to the consumption of the utility and/or perform the one or more operations with the received data relating to the measured consumption of the utility based on the one or more stored keys and optionally also the user certificate.

Optionally, the processing resource is configured to:
receive a read meter command from a user of the mobile electronic device via the user interface; and
wirelessly fetch from the meter, via the wireless communication interface, the data relating to the measured consumption of the utility in response to receipt of the read meter command.

Optionally, the mobile electronic device comprises a memory, wherein the processing resource is configured to save the received data relating to the measured consumption of the utility in the memory.

Optionally, the processing resource is configured to:
receive a save reading command from a user of the mobile electronic device via the user interface; and
save the received data relating to the measured consumption of the utility in the memory in response to receipt of the save reading command.

Optionally, the processing resource is configured to cause the user interface to display the received data relating to the measured consumption of the utility.

Optionally, the processing resource is configured to:
receive a display reading command from a user of the mobile electronic device via the user interface; and
cause the user interface to display the received data relating to the measured consumption of the utility in response to receipt of the display reading command.

Optionally, the processing resource is configured to:
prompt a user of the mobile electronic device to select a display format via the user interface in response to receipt of the display reading command; and
cause the user interface to display the received data relating to the measured consumption of the utility in a display format according to the selected display format.

Optionally, the display format comprises a text display format or a graphical display format.

Optionally, the mobile electronic device comprises a memory, wherein, based on the selected display format, the processing resource is configured to retrieve historical data relating to the measured consumption of the utility from the memory and to cause the user interface to display the historical data relating to the measured consumption of the utility together with the most recently received data relating to the measured consumption of the utility.

Optionally, based on the selected display format, the processing resource is configured to retrieve historical data relating to the measured consumption of the utility from the memory and to cause the user interface to display the historical data relating to the measured consumption of the utility together with the most recently received data relating to the measured consumption of the utility graphically to illustrate the evolution of the measured consumption of the utility over time, for example as a line graph or as a bar chart.

Optionally, the processing resource is configured to transmit the received data relating to the measured consumption of the utility to a supplier of the utility.

Optionally, the mobile electronic device comprises a further communication interface, wherein the processing resource is configured to transmit the received data relating to the measured consumption of the utility to the supplier of the utility via the further communication interface.

Optionally, the processing resource is configured to:
receive a transmit reading command from a user of the mobile electronic device via the user interface; and
transmit the received data relating to the measured consumption of the utility to a supplier of the utility in response to receipt of the transmit reading command.

Optionally, the mobile electronic device comprises a computer program such as an app stored in the memory.

Optionally, when executed by the processing resource, the computer program, configures the processing resource to:
wirelessly transmit the connection request signal to the meter via the wireless communication interface;
wirelessly receive from the meter, via the wireless communication interface, the data relating to the measured consumption of the utility based on the transmitted connection request signal; and
perform the one or more operations with the received data relating to the measured consumption of the utility based on one or more commands provided by a user of the mobile electronic device via the user interface.

Optionally, the computer program is configured so that when executed by the processing resource of the mobile electronic device for the first time, the computer program invites the user to set a password and/or enter other authentication details.

Optionally, the computer program is configured so that when executed by the processing resource of the mobile electronic device on each subsequent occasion, the computer program requires the user to enter the password and/or to complete other authentication steps to verify the user's identity.

Optionally, the computer program is configured so that once the user has entered the correct password and/or successfully completed the other authentication steps to verify the user's identity, the computer program configures the processing resource of the mobile electronic device to:
wirelessly transmit the connection request signal to the meter via the wireless communication interface;
wirelessly receive from the meter, via the wireless communication interface, data relating to the measured consumption of the utility based on the transmitted connection request signal; and
perform the one or more operations with the received data relating to the measured consumption of the utility based on one or more commands provided by the user of the mobile electronic device via the user interface.

Optionally, the processing resource is configured to:
wirelessly receive, from the meter via the wireless communication interface, a request to transmit a link for downloading the computer program from the internet to the mobile electronic device in response to establishing a wireless connection between the processing resource and the meter for the first time;
prompt the user of the mobile electronic device to provide link transmission authorisation via the user interface in response to receipt of the request to transmit the link to the mobile electronic device;
wirelessly receive the link in response to the receipt of the link transmission authorisation from the user; and
prompt the user to use the link to download the computer program from the internet and to install and run the computer program.

Optionally, the processing resource is configured to:
prompt the user of the mobile electronic device, via the user interface, to use the link to download the computer program from the internet in response to receipt of the link to the computer program from the meter; and
download the computer program from the internet in response to receipt of program download authorisation from the user.

Optionally, the processing resource is configured to:
prompt the user of the mobile electronic device, via the user interface, to provide program install and run authorisation via the user interface in response to receipt of the computer program from the internet; and
install and run the computer program in response to receipt of the program install and run authorisation from the user.

Optionally, the processing resource is configured to store the received computer program in the memory.

Optionally, the mobile electronic device is configured to image a code which is displayed on or by the meter and which includes information defining a link for downloading the computer program from the internet, wherein the code is configured so that when imaged by the mobile electronic device, the processing resource receives the link, for example wherein the code comprises a QR code.

Optionally, the mobile electronic device comprises an operating system wherein, when executed by the processing resource, the operating system causes the processing resource to:
wirelessly receive, from the meter via the wireless communication interface, the request to transmit the link in response to establishing a wireless connection between the processing resource and the meter for the first time.

Optionally, the mobile electronic device comprises at least one of a mobile phone, a cell phone, a smartphone, a tablet or a laptop.

Optionally, the mobile electronic device comprises a computer such as a desktop PC and a reader device configured to communicate wirelessly with the meter such as an NFC reader device, wherein the reader device is configured for communication with the computer, for example wherein the reader device is a peripheral device which is configured for communication with the computer.

Optionally, the user interface comprises a touchscreen, a screen and a keyboard, or a screen and a keypad.

Optionally, the utility comprises electricity, a fluid, gas, water, or heat.

Optionally, the data relating to the measured consumption of the utility comprises one or more utility consumption readings or values and one or more corresponding time stamps or values.

According to an aspect of the present disclosure there is provided a system comprising the meter as described above and the mobile electronic device as described above.

According to an aspect of the present disclosure there is provided a method of reading from a meter data relating to a measured consumption of a utility and performing one or more operations with the read data, the method comprising:
wirelessly transmitting a connection request signal from a mobile electronic device to the meter;
wirelessly connecting the meter and the mobile electronic device based on the transmitted connection request signal;
wirelessly transmitting data relating to the measured consumption of the utility from the meter to the mobile electronic device; and
using the mobile electronic device to perform one or more operations with the received data based on one or more commands provided by a user of the mobile electronic device via a user interface of the mobile electronic device.

Optionally, the one or more operations comprise at least one of:
displaying the data relating to the measured consumption of the utility via the user interface;
transmitting the data relating to the measured consumption of the utility to the supplier of the utility; or
saving the data relating to the measured consumption of the utility to a memory of the mobile electronic device.

Optionally, the utility comprises electricity, a fluid, gas, water, or heat.

Optionally, the data relating to the measured consumption of the utility comprises one or more utility consumption readings or values and one or more corresponding time stamps or values.

According to an aspect of the present disclosure there is provided a computer program such as an application or an app for a mobile electronic device, which, when executed by a processing resource of the mobile electronic device, configures the processing resource to:
wirelessly transmit a connection request signal to the meter via a wireless communication interface of the mobile electronic device;
wirelessly receive, from a meter for measuring a consumption of a utility, via the wireless communication interface, data relating to the measured consumption of the utility based on the transmitted connection request signal; and
perform one or more operations with the received data based on one or more commands provided by a user of the mobile electronic device via a user interface of the mobile electronic device.

Optionally, the one or more operations comprise at least one of:
displaying the data relating to the measured consumption of the utility via the user interface;
transmitting the data relating to the measured consumption of the utility to the supplier of the utility; or
saving the data relating to the measured consumption of the utility to a memory of the mobile electronic device.

Optionally, the utility comprises electricity, a fluid, gas, water, or heat.

Optionally, the data relating to the measured consumption of the utility comprises one or more utility consumption readings or values and one or more corresponding time stamps or values.

It should be understood that any one or more of the optional features of any one of the foregoing aspects of the present disclosure may be combined with any one or more of the other foregoing aspects of the present disclosure or the optional features of any one or more of the other foregoing aspects of the present disclosure.

### BRIEF DESCRIPTION OF THE DRAWINGS

A meter, a mobile electronic device, a system, associated methods and associated computer programs will now be described by way of non-limiting example only with reference to the drawings of which:
FIG. 1 is a schematic of a meter for measuring a consumption of a utility and a mobile electronic device during wireless communications between the meter and the mobile electronic device;
FIG. 2A is a schematic of a user interface of the mobile electronic device shown in FIG. 1 displaying a menu of options including an option for reading the meter shown in FIG. 1 and options for performing one or more operations with the received meter reading;
FIG. 2B is a schematic of a user interface of the mobile electronic device shown in FIG. 1 during a wireless connection procedure between the meter and the mobile electronic device displaying a connection pending message indicating that the mobile electronic device is attempting to connect with the meter;
FIG. 2C is a schematic of a user interface of the mobile electronic device shown in FIG. 1 during a wireless connection procedure between the meter and the mobile electronic device displaying a connection declined message indicating that the user of the mobile electronic device is not authorised to connect with the meter;
FIG. 2D is a schematic of a user interface of the mobile electronic device shown in FIG. 1 during a wireless connection procedure between the meter and the mobile electronic device displaying a successful connection message indicating that the meter is enabled for wireless communications with the mobile electronic device;
FIG. 3A is a schematic of a user interface of the mobile electronic device shown in FIG. 1 displaying a meter reading;
FIG. 3B is a schematic of a user interface of the mobile electronic device shown in FIG. 1 displaying a reading transmitted to supplier confirmation message and a reading received by supplier confirmation message;
FIG. 3C is a schematic of a user interface of the mobile electronic device shown in FIG. 1 displaying a reading saved confirmation message;
FIG. 4A is a schematic of a user interface of the mobile electronic device shown in FIG. 1 displaying a menu of display format options relating to a format for a display of one or more meter readings;
FIG. 4B is a schematic of a user interface of the mobile electronic device shown in FIG. 1 displaying a meter reading as text;
FIG. 4C is a schematic of a user interface of the mobile electronic device shown in FIG. 1 displaying a meter reading together with historical meter readings as a line graph; and
FIG. 4D is a schematic of a user interface of the mobile electronic device shown in FIG. 1 displaying a meter reading together with historical meter readings as a bar chart.

### DETAILED DESCRIPTION OF THE DRAWINGS

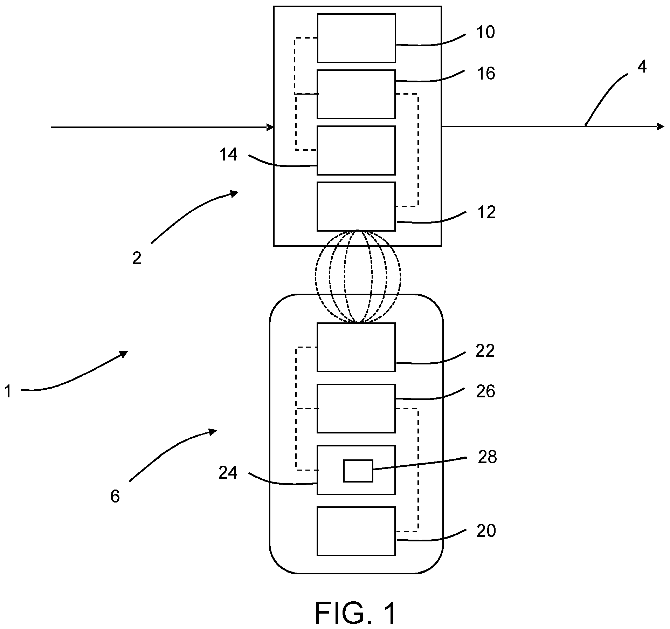

Referring initially to FIG. 1 there is shown a system generally designated 1 comprising a meter generally designated 2 for measuring a consumption of a utility such as electricity, a fluid, gas, water, or heat as the utility flows along a conduit 4 towards for consumption at a load (not shown), and a mobile electronic device in the form of a smart phone generally designated 6 for reading data relating to the measured consumption of the utility from the meter 2 and for performing one or more operations with the data.

The meter 2 includes a measurement arrangement 10 for measuring a consumption of the utility at different times, a wireless communication interface 12 for wireless communications with the mobile electronic device 6, a memory 14, and a processing resource 16. The memory 14 stores a key which identifies the meter 2 and one or more meter details such as the manufacturer name, the model number and the serial number of the meter 2. As indicated by the dashed lines in FIG. 1, the processing resource 16 is configured for communication with the measurement arrangement 10, the wireless communication interface 12 and the memory 14.

The mobile electronic device 6 includes a user interface 20 in the form of a touchscreen, a wireless communication interface 22 for wireless communications with the meter 2, a memory 24, and a processing resource 26. As indicated by the dashed lines in FIG. 1, the processing resource 26 is configured for communication with the user interface 20, the wireless communication interface 22 and the memory 24.

The wireless communication interface 22 of the mobile electronic device 6 and the wireless communication interface 12 of the meter 2 are configured so that when the wireless communication interface 22 of the mobile electronic device 6 is positioned in proximity to the wireless communication interface 12 of the meter 2, a magnetic field may be inductively coupled therebetween as indicated by the dotted lines in FIG. 1, for the wireless transmission of data between the processing resource 26 of the mobile electronic device 6 and the processing resource 16 of the meter, for example according to the Near-field Communication (NFC) protocol.

The memory 24 of the mobile electronic device 6 stores a computer program in the form of an app 28. The app 28 may be downloaded to the mobile electronic device 6 from an online app store. When the app 28 is run for the first time, the app 28 requests one or more keys and a user certificate from a utility provider associated with the meter 2 e.g. the app 28 requests one or more keys and a user certificate from the utility provider which installed the meter 2 and/or which is responsible for providing the utility. In response to the request, the processing resource 26 of the mobile electronic device 6 receives one or more keys and a user certificate from the utility provider and the processing resource 26 securely stores the one or more keys and the user certificate in the memory 24 of the mobile electronic device 6, wherein the one or more keys identify one or more meters which the user of the mobile electronic device 6 is authorised to read and the user certificate defines the rights of the user of the mobile electronic device 6 in relation to said one or more meters and/or in relation to data relating to the consumption of the utility which can be read from said one or more meters. The one or more stored keys are linked to the individual mobile electronic device 6 and cannot be transferred to another device. The user certificate is also linked uniquely to the mobile electronic device 6 and can only be used from the mobile electronic device 6 from which it was requested. The one or more keys and the user certificate may be configured to expire after a predetermined period of time. When executed by the processing resource 26 of the mobile electronic device 6, the app 28 causes the mobile electronic device 6 to connect to the internet from time-to-time and check whether the one or more keys and the user certificate stored in the memory 24 of the mobile electronic device 6 remain valid for use.

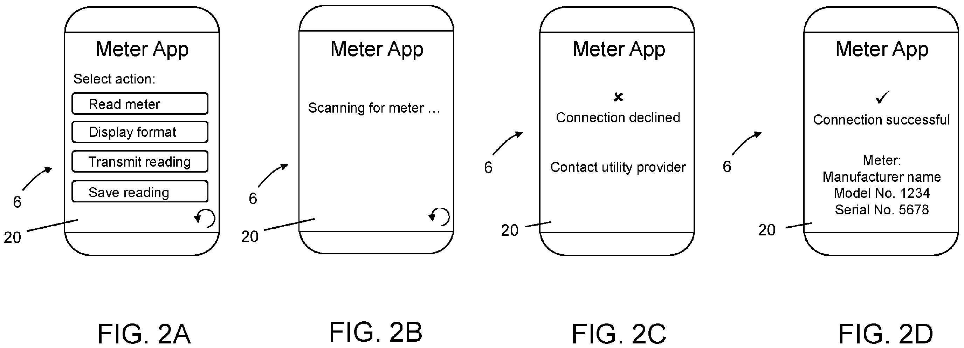

When the user subsequently wishes to read data from the meter 2 relating to the measured consumption of the utility and/or to otherwise control the meter 2, the user runs the app 28 on the mobile electronic device 6 and the app 28 causes the mobile electronic device 6 to display a main menu of options including a "read meter" option, a "display format" option, a "transmit reading" option and a "save reading" option as shown in FIG. 2A. If the user selects the read meter option, the processing resource 26 of the mobile electronic device 6 causes the user interface 20 of the mobile electronic device 6 to display a scanning message as shown in FIG. 2B and causes the wireless communication interface 22 of the mobile electronic device 6 to generate a time-varying magnetic field carrying a wireless connection request signal which includes the key and the user certificate. If the wireless communication interface 22 of the mobile electronic device 6 is in sufficient proximity to the wireless communication interface 12 of the meter 2, the time-varying magnetic field is inductively coupled from the wireless communication interface 22 of the mobile electronic device 6 to the wireless communication interface 12 of the meter 2 and the wireless connection request signal is transmitted to the processing resource 16 of the meter 2 via the inductively-coupled wireless communication interfaces 22, 12.

In response to receipt of the connection request signal, the processing resource 16 of the meter 2 compares the one or more keys received from the mobile electric device 6 with the key stored in the memory 14 of the meter 2.

If none of the keys received from the mobile electric device 6 match the key stored in the memory 14 of the meter 2, the processing resource 16 of the meter 2 is not authorised to transmit utility consumption data to the mobile electric device 6 and is restricted from processing one or more meter configuration requests received from the mobile electric device 6, and the processing resource 16 of the meter 2 sends a connection declined signal to the processing resource 26 of the mobile electric device 6 via the inductively-coupled wireless communication interfaces 22, 12. In response to receipt of the connection declined signal from the processing resource 16 of the meter 2, the processing resource 26 of the mobile electronic device 6 causes the user interface 20 of the mobile electronic device 6 to display a message indicating that the connection request to the meter 2 is declined as shown in FIG. 2C and prompts the user of the mobile electronic device 6 to contact their utility provider for assistance.

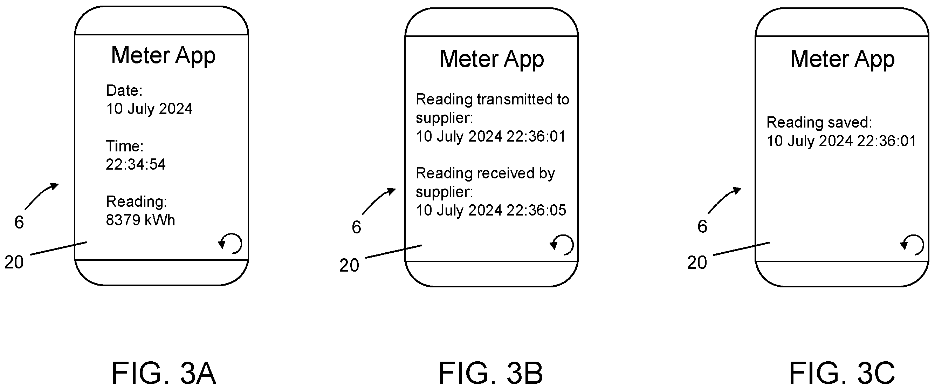

If one or more of the keys received from the mobile electric device 6 matches the key stored in the memory 14 of the meter 2, the processing resource 16 of the meter 2 is wirelessly connected to the processing resource 26 of the mobile electric device 6 - i.e. the processing resource 16 of the meter 2 is permitted to transmit utility consumption data to the mobile electric device 6 and is permitted to process one or more meter configuration requests received from the mobile electric device 6 based on the user certificate - and the processing resource 16 of the meter 2 sends a connection confirmation signal including the meter details to the processing resource 26 of the mobile electric device 6 via the inductively-coupled wireless communication interfaces 22, 12 together with the data relating to the measured consumption of the utility, wherein the data comprises a consumption reading or value and a corresponding time stamp or value. In response to receipt of the connection confirmation signal from the processing resource 16 of the meter 2, the processing resource 26 of the mobile electronic device 6 causes the user interface 20 of the mobile electronic device 6 to display a message confirming a successful connection with the meter 2 and to display the meter details as shown in FIG. 2D, followed by the meter reading shown in FIG. 3A.

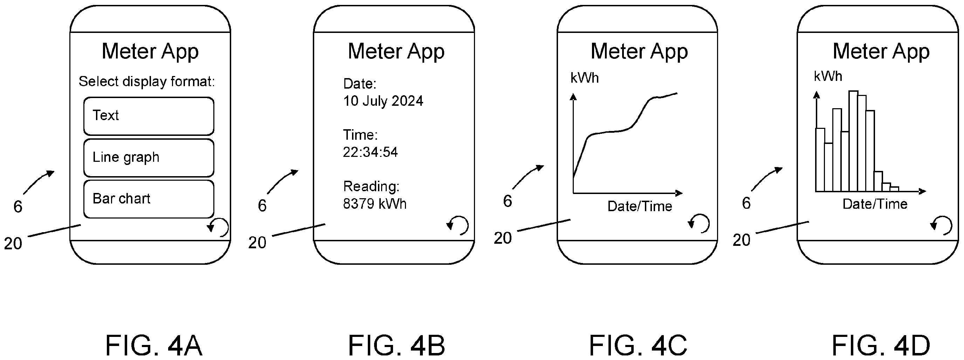

If the user selects the "display format" option from the main menu shown in FIG. 2A, the user interface 20 sends a display format command to the processing resource 26 and the processing resource 26 causes the user interface 20 to display a menu of display format options as shown in FIG. 4A including a "text display format" option, a "line graph display format" option and a "bar chart display format" option.

If the user selects the "text display format" option, the user interface 20 sends a text display format command to the processing resource 26 and the processing resource 26 causes the user interface 20 to display the data relating to the measured consumption of the utility in a text display format as shown in FIG. 4B.

If the user selects the "line graph display format" option, the user interface 20 sends a line graph display format command to the processing resource 26 and the processing resource 26 retrieves historical data relating to the measured consumption of the utility from the memory 28 of the mobile electronic device 6 and causes the user interface 20 to display the historical data relating to the measured consumption of the utility together with the most recently received data relating to the measured consumption of the utility in a line graph display format as shown in FIG. 4C.

If the user selects the "bar chart display format" option, the user interface 20 sends a bar chart display format command to the processing resource 26 and the processing resource 26 retrieves historical data relating to the measured consumption of the utility from the memory 28 of the mobile electronic device 6 and causes the user interface 20 to display the historical data relating to the measured consumption of the utility together with the most recently received data relating to the measured consumption of the utility in a bar chart display format as shown in FIG. 4D.

If the user selects the "transmit reading" option from the main menu shown in FIG. 2A, the user interface 20 sends a transmit reading command to the processing resource 26 and the processing resource 26 transmits the data relating to the measured consumption of the utility to a supplier of the utility, for example via a further communication interface (not shown in FIG. 1) of the mobile electronic device 6. Once the data has been successfully transmitted to the supplier of the utility, the processing resource 26 of the mobile electronic device 6 causes the user interface 20 to display a reading transmitted confirmation message as shown in FIG. 3B. If the supplier of the utility confirms receipt of the data to the processing resource 26 of the mobile electronic device 6, the processing resource 26 of the mobile electronic device 6 also causes the user interface 20 to display a reading received confirmation message as shown in FIG. 3B.

If the user selects the "save reading" option from the main menu shown in FIG. 2A, the user interface 20 sends a save reading command to the processing resource 26 and the processing resource 26 saves the data relating to the measured consumption of the utility in the memory 24 of the mobile electronic device 6. Once the data has been successfully saved in the memory 24 of the mobile electronic device 6, the processing resource 26 of the mobile electronic device 6 causes the user interface 20 to display a reading saved confirmation message as shown in FIG. 3C.

From the forgoing description, one of ordinary skill in the art will understand that a user may use their own mobile electronic device 6 to read the data relating to the measured consumption of the utility from the meter 2 and to perform one or more operations with the data, for example to display the data, save the data or transmit the data to the supplier of the utility. The user can connect to the meter 2 with their own mobile electronic device 6 via wireless communication interfaces (e.g. NFC) and is able to request data from the meter 2 based on the user's rights as defined by the user certificate. The meter 2 then transmits the relevant data to the mobile electronic device 6. The user can use the app 28 to perform one or more operations with the data based on the user's rights as defined by the user certificate. For example, the user can use the app 28 to cause the user interface 20 of the mobile electronic device 6 to display the consumption data clearly on the user's own mobile electronic device 6. The user can use the app 28 to cause the user interface 20 of the mobile electronic device 6 to display the consumption data together with historical consumption data to allow comparison of the consumption data with the historical consumption data, e.g. as a graph. The user can use the app 28 to cause the consumption data to be stored in the memory 24 of the user's own mobile electronic device 6. Furthermore, the user can use the app 28 to cause the mobile electronic device 6 to send one or more interim meter readings including the consumption data from the app 28 to a utility supplier, for example via an internet connection. Consequently, there is no need for the meter 2 to be configured to send one or more interim meter readings including the consumption data from the meter 2 to the utility supplier, for example via an internet connection.

The combination of a new meter wireless interface (e.g. NFC) with widespread everyday mobile electronic devices (e.g. a smart phone or a cell phone) may provide a better and more convenient method of monitoring and displaying consumption data, for example via the app 28 on the mobile electronic device 6. This may make it easier for the user to check, control and optimize their own consumption of the utility. In particular, this may make it easier for the user to check their consumption, recognize deviations earlier and react to them if necessary.

One of ordinary skill in the art will also understand that various modifications are possible to the meter, the mobile electronic device and the associated methods described above. For example, the user certificate may define user rights which are different to those described above. For example, the user certificate may define user rights which enable the user to perform one or more operations in relation to the utility consumption data read from the meter 2 which are different to the operations described above and which result in the user being presented with options other than those options described above with reference to FIGS. 2A to 4D. For example, the user certificate may define user rights which enable to the user to select a data display format which is different to the data display options described with reference to FIGS. 4A to 4D e.g. the user certificate may define user rights that enable the user to display utility consumption data relating to different time periods and/or to the cost of consumption of the utility over one or more different time periods.

In response to a request submitted via the app 28, the utility provider may issue one or more keys and a user certificate that defines user rights enabling the user to read utility consumption data from more than one meter and/or to perform one or more operations on utility consumption data read from more than one meter e.g. the utility provider may issue one or more keys and a user certificate which defines user rights enabling the user to read utility consumption data from any meter associated with the utility provider and/or to perform one or more operations on utility consumption data read from any meter associated with the utility provider.

The user certificate issued by the utility provider may enable the user to change a configuration of the meter. For example, the user certificate may define user rights enabling the user to change a configuration of the meter, for example to allow a user to change at least one of: the date, the time, an address such as a Narrow Band Internet of Things (NB-loT) bootstrap server address which the meter connects to, or an alarm setting.

Rather than the user of the mobile electronic device 6 downloading the app 28 from an online app store on their own initiative, the memory 14 of the meter 2 may store a link for downloading an app from the internet, and an operating system of the mobile electronic device 6 may be used to establish a wireless connection between the processing resource 26 of the mobile electronic device 6 and the processing resource 16 of the meter 2 for the first time via the wireless communication interfaces 12, 22. In response to establishing the wireless connection between the processing resource 26 of the mobile electronic device 6 and the processing resource 16 of the meter 2 for the first time, the processing resource 16 of the meter 2 may wirelessly transmit the link to the processing resource 26 of the mobile electronic device 6 via the wireless communication interfaces 12, 22. More specifically, the operating system may cause the processing resource 26 of the mobile electronic device 6 to wirelessly receive, from the meter 2 via the wireless communication interfaces 12, 22, a request to transmit the link in response to establishing a wireless connection between the processing resource 26 of the mobile electronic device 6 and the processing resource 16 of the meter 2 for the first time and prompt the user of the mobile electronic device 6 to provide link transmission authorisation via the user interface 20 in response to receipt of the request to transmit the link. The processing resource 26 of the mobile electronic device 6 may wirelessly receive the link from the meter 2 in response to the receipt of link transmission authorisation from the user. The operating system may then cause the processing resource 26 to prompt the user of the mobile electronic device 6, via the user interface 20, to use the link to download the app from the internet and to install and run the app on the mobile electronic device 6.

Rather than the user of the mobile electronic device 6 downloading the app 28 from an online app store on their own initiative, the meter may comprise, or be configured to display, a code which includes information defining a link for downloading an app from the internet, and an operating system of the mobile electronic device 6 may be used to establish a wireless connection between the processing resource 26 of the mobile electronic device 6 and the processing resource 16 of the meter 2 for the first time via the wireless communication interfaces 12, 22. The code may be configured so that, when imaged by the mobile electronic device, the mobile electronic device receives the link. For example, the code may be a QR code.

Although the mobile electronic device 6 was described above as a smartphone, one of skill in the art will understand that the mobile electronic device 6 may comprise at least one of a mobile phone, a cell phone, a smartphone, a tablet, a laptop, or a computer such as a desktop PC and a reader device configured to communicate wirelessly with the meter such as an NFC reader device, wherein the reader device is configured for communication with the computer, for example wherein the reader device is a peripheral device which is configured for communication with the computer.

Although a meter, a mobile electronic device and associated methods have been described in terms of preferred embodiments as set forth above, it should be understood that these embodiments are illustrative only and that the invention is not limited to those embodiments. Those skilled in the art will be able to make modifications and alternatives to the described embodiments in view of the disclosure which are contemplated as falling within the scope of the appended claims. Each feature disclosed or illustrated herein may be incorporated in any embodiment, whether alone or in any appropriate combination with any other feature disclosed or illustrated herein. In particular, one of ordinary skill in the art will understand that one or more of the features of the embodiments of the present disclosure described above with reference to the drawings may produce effects or provide advantages when used in isolation from one or more of the other features of the embodiments of the present disclosure and that different combinations of the features are possible other than the specific combinations of the features of the embodiments of the present disclosure described above.

The skilled person will understand that in the preceding description and appended claims, positional terms such as 'above', 'along', 'side', etc. are made with reference to the accompanying drawings. These terms are used for ease of reference but are not intended to be of limiting nature. These terms are therefore to be understood as referring to an object when in an orientation as shown in the accompanying drawings.

Use of the term "comprising" when used in relation to a feature of an embodiment of the present disclosure does not exclude other features or steps. Use of the term "a" or "an" when used in relation to a feature of an embodiment of the present disclosure does not exclude the possibility that the embodiment may include a plurality of such features.

The use of reference signs in the claims should not be construed as limiting the scope of the claims.

## Claims

1. A meter for measuring a consumption of a utility, the meter comprising:
a measurement arrangement for measuring a consumption of a utility;
a wireless communication interface for wireless communications between the meter and a mobile electronic device; and
a processing resource configured to:
receive data relating to the measured consumption of the utility from the measurement arrangement;
wirelessly receive a connection request signal from the mobile electronic device;
wirelessly connect with the mobile electronic device via the wireless communication interface based on the received connection request signal; and
wirelessly transmit, via the wireless communication interface, the data relating to the measured consumption of the utility to the mobile electronic device to enable the mobile electronic device to perform one or more operations with the data relating to the measured consumption of the utility.

2. The meter as claimed in claim 1, wherein the wireless communication interface is configured for wireless communications between the meter and a mobile electronic device using a wireless communication signal comprising at least one of: an electromagnetic signal, an RF signal, an optical signal, a time-varying magnetic field or a time-varying electric field, for example wherein the wireless communication interface is configured for wireless communications between the meter and a mobile electronic device by inductively coupling a wireless communication signal between the wireless communication interface and the mobile electronic device, and optionally, wherein the wireless communication interface comprises a Near-field Communication (NFC) interface.

3. The meter as claimed in claim 1 or 2, comprising a memory storing a key, wherein the stored key identifies the meter, wherein the received connection request signal comprises one or more keys which identify one or more meters that a user of the mobile electronic device is authorised to read, and wherein the processing resource is configured to:
compare the stored key with the one or more keys of the received connection request signal; and
wirelessly connect with the mobile electronic device via the wireless communication interface in response to the stored key matching one of the one or more keys of the received connection request signal to enable the processing resource to transmit the data relating to the measured consumption of the utility to the mobile electronic device via the wireless communication interface; and optionally
wherein the received connection request signal comprises a user certificate defining the rights of a user of the mobile electronic device in relation to one or more meters and/or in relation to the data relating to the consumption of the utility which can be read from one or more meters, and wherein the processing resource is configured to:
transmit the data relating to the measured consumption of the utility to the mobile electronic device via the wireless communication interface based on the user certificate; and/or
allow the user to change a configuration of the meter based on the user certificate, for example allow the user to change at least one of: the date, the time, an address such as a Narrow Band Internet of Things (NB-loT) bootstrap server address which the meter connects to, or an alarm setting.

4. The meter as claimed in any preceding claim, wherein the processing resource is configured to:
wirelessly receive a data read request from the mobile electronic device via the wireless communication interface and wirelessly transmit the data relating to the measured consumption of the utility to the mobile electronic device via the wireless communication interface in response to the receipt of the data read request from the mobile electronic device; or
wirelessly transmit the data relating to the measured consumption of the utility to the mobile electronic device via the wireless communication interface automatically in response to wireless connection with the mobile electronic device without waiting to receive a data read request from the mobile electronic device.

5. The meter as claimed in any preceding claim,
wherein the meter comprises a memory, wherein the memory stores a link for downloading a computer program such as an app from the internet, and wherein the processing resource is configured to wirelessly transmit to the mobile electronic device, via the wireless communication interface, a request to transmit the link to the mobile electronic device, in response to establishing a wireless connection between the processing resource and the mobile electronic device for the first time, and wirelessly transmit the link to the mobile electronic device in response to the receipt, via the wireless communication interface, of a wireless link transmission authorisation signal from the mobile electronic device; or
wherein the meter comprises, or is configured to display, a code which includes information defining a link for downloading a computer program such as an app from the internet, wherein the code is configured so that, when imaged by a mobile electronic device, the mobile electronic device receives the link, for example wherein the code comprises a QR code.

6. A mobile electronic device for reading data relating to the measured consumption of the utility from a meter and for performing one or more operations with the data, the mobile electronic device comprising:
a wireless communication interface for wireless communications between the mobile electronic device and a meter for measuring a consumption of a utility;
a user interface; and
a processing resource configured to:
wirelessly transmit a connection request signal to the meter via the wireless communication interface;
wirelessly receive from the meter, via the wireless communication interface, data relating to the measured consumption of the utility based on the transmitted connection request signal; and
perform one or more operations with the received data relating to the measured consumption of the utility based on one or more commands provided by a user of the mobile electronic device via the user interface.

7. The mobile electronic device as claimed in claim 6, wherein the wireless communication interface is configured for wireless communications between the mobile electronic device and a meter using a wireless communication signal comprising at least one of: an electromagnetic signal, an RF signal, an optical signal, a time-varying magnetic field or a time-varying electric field, for example wherein the wireless communication interface is configured for wireless communications between the mobile electronic device and a meter by inductively coupling a wireless communication signal between the wireless communication interface and the meter, and optionally, wherein the wireless communication interface comprises a Near-field Communication (NFC) interface.

8. The mobile electronic device as claimed in claim 6 or 7, comprising a memory storing one or more keys for identifying one or more meters which a user of the mobile electronic device is permitted to read and optionally for storing a user certificate defining the rights of the user of the mobile electronic device in relation to one or more meters and/or in relation to the data relating to the consumption of the utility which can be read from one or more meters, and
wherein the connection request signal includes the one or more keys and optionally also the user certificate.

9. The mobile electronic device as claimed in claim 8, wherein the processing resource is configured to read the data relating to the consumption of the utility and/or perform the one or more operations with the received data relating to the measured consumption of the utility based on the one or more stored keys and optionally also the user certificate.

10. The mobile electronic device as claimed in any one of claims 6 to 9, wherein the processing resource is configured to:
receive a read meter command from a user of the mobile electronic device via the user interface; and
wirelessly fetch from the meter, via the wireless communication interface, the data relating to the measured consumption of the utility in response to receipt of the read meter command.

11. The mobile electronic device as claimed in any one of claims 6 to 10, comprising a memory, and a computer program such as an app stored in the memory, wherein, when executed by the processing resource, the computer program, configures the processing resource to:
wirelessly transmit the connection request signal to the meter via the wireless communication interface;
wirelessly receive from the meter, via the wireless communication interface, the data relating to the measured consumption of the utility based on the transmitted connection request signal; and
perform the one or more operations with the received data relating to the measured consumption of the utility based on one or more commands provided by the user of the mobile electronic device via the user interface, and optionally,
wherein the processing resource is configured to wirelessly receive, from the meter via the wireless communication interface, a request to transmit a link for downloading the computer program from the internet to the mobile electronic device in response to establishing a wireless connection between the processing resource and the meter for the first time; prompt the user of the mobile electronic device to provide link transmission authorisation via the user interface in response to receipt of the request to transmit the link to the mobile electronic device; wirelessly receive the link in response to the receipt of the link transmission authorisation from the user; and prompt the user to use the link to download the computer program from the internet and to install and run the computer program; or
wherein the mobile electronic device is configured to image a code which is displayed on or by the meter and which includes information defining a link for downloading the computer program from the internet, wherein the code is configured so that when imaged by the mobile electronic device, the processing resource receives the link, for example wherein the code comprises a QR code.

12. A system comprising the meter as claimed in any one of claims 1 to 5 and the mobile electronic device as claimed in any one of claims 6 to 11.

13. A method of reading from a meter data relating to a measured consumption of a utility and performing one or more operations with the read data, the method comprising:
wirelessly transmitting a connection request signal from a mobile electronic device to the meter;
wirelessly connecting the meter and the mobile electronic device based on the transmitted connection request signal;
wirelessly transmitting data relating to the measured consumption of the utility from the meter to the mobile electronic device; and
using the mobile electronic device to perform one or more operations with the received data based on one or more commands provided by a user of the mobile electronic device via a user interface of the mobile electronic device.

14. A computer program such as an application or an app for a mobile electronic device, which, when executed by a processing resource of the mobile electronic device, configures the processing resource to:
wirelessly transmit a connection request signal to the meter via a wireless communication interface of the mobile electronic device;
wirelessly receive, from a meter for measuring a consumption of a utility, via the wireless communication interface, data relating to the measured consumption of the utility based on the transmitted connection request signal; and
perform one or more operations with the received data based on one or more commands provided by a user of the mobile electronic device via a user interface of the mobile electronic device.

15. The meter as claimed in any one of claims 1 to 5, the mobile electronic device as claimed in any one of claims 6 to 11, the system as claimed in claim 12, the method as claimed in claim 13, or the computer program as claimed in claim 14, wherein at least one of:
the one or more operations comprise at least one of displaying the data relating to the measured consumption of the utility via the user interface of the mobile electronic device optionally together with historical data relating to the measured consumption of the utility, transmitting the data relating to the measured consumption of the utility from the mobile electronic device to the supplier of the utility, or saving the data relating to the measured consumption of the utility to a memory of the mobile electronic device;
the mobile electronic device comprises at least one of a mobile phone, a cell phone, a smartphone, a tablet, a laptop, or a computer such as a desktop PC and a reader device configured to communicate wirelessly with the meter such as an NFC reader device, wherein the reader device is configured for communication with the computer, for example wherein the reader device is a peripheral device which is configured for communication with the computer;
the utility comprises electricity, a fluid, gas, water, or heat; or
the data relating to the measured consumption of the utility comprises one or more utility consumption readings or values and one or more corresponding time stamps or values.
